# EUROPÄISCHE PATENTSCHRIFT

(11) **EP 0 417 581 B1**
(45) Veröffentlichungstag und Bekanntmachung des Hinweises auf die Patenterteilung: **02.11.1994**
(21) Anmeldenummer: 90116817.9
(22) Anmeldetag: 01.09.1990
(51) Int. Cl.: C08G 18/10, C08L 75/04

(54) **Verfahren zur Herstellung von thermoplastische Polyurethane enthaltenden Werkstoffen**
Process for the preparation of polymer blends containing thermoplastic polyurethanes
Procédé de préparation de matériaux polymeres contenant des polyuréthanes thermoplastiques

(30) Priorität: 15.09.1989 DE 3930838
(43) Veröffentlichungstag der Anmeldung: 20.03.1991
(73) Patentinhaber: BAYER AG, 51368 Leverkusen (DE)
(72) Erfinder: Heidingsfeld, Herbert D.I., D-5020 Frechen 4 (DE); Meister, Willi, Dr., D-4047 Dormagen 1 (DE); Winkler, Jürgen D.I., D-5090 Leverkusen 3 (DE)

(56) Entgegenhaltungen:
- EP-A- 0 012 414
- EP-A- 0 041 347
- FR-A- 1 173 178

## Beschreibung

Die Erfindung betrifft ein neues Verfahren zur Herstellung von Chemiewerkstoffen, die thermoplastische Polyurethane (TPU) enthalten. Aus US-A-3 214 411 ist bekannt, die Ausgangsverbindungen für TPU, insbesondere Isocyanate, Kettenverlängerer und Polyole aus einem Mischer auf ein Band zu geben unter Bildung eines Polyurethans. Das erhaltene Polyurethan wird anschließend zerkleinert und in Extrudern unter Erhalt körniger Granulate nachhomogenisiert. Dieses Verfahren ist unter dem Begriff "Refinern" bekannt.

Es ist weiterhin bekannt, vorgeformtes TPU zusammen mit weiteren Komponenten wie Glasfasern, Polycarbonaten oder anderen Polymeren wie z.B. ABS in einem Extruder bzw. Zweiwellen misch Kneter miteinander zu mischen und die erhaltenen Stränge anschließend zu granulieren.

Aus der DE-A 2 854 406 ist weiterhin ein Verfahren zur Herstellung eines thermoplastischen Chemiewerkstoffes bekannt, bei dem man faserartige Verstärkungsmittel und polare Polymerisate vor oder während der Herstellung eines thermoplastischen Polyurethans in einer Zweiwellen-Schneckenmaschine den polyurethanbildenden Komponenten zusetzt. Nachteilig an dem bekannten Verfahren zur Compoundierung bzw. zum Refinern ist, daß die thermoplastischen Polyurethanelastomere bedingt durch hohe Friktion und hohe Temperaturbelastung geschädigt werden. Diese Schädigung führt zur Herabsetzung der Zugfestigkeit, der Schlagzähigkeit bei tiefen Temperaturen und der Viskosität. Teilkristalline Produkte verlieren ihre Kristallinität, was zu niedrigeren Verfestigungsgeschwindigkeiten führt. Die Schädigung durch Friktion ist proportional der Viskosität der Ausgangsware, wobei der Abbaugrad nicht hinreichend kontrollierbar ist.

Der Erfindung lag die Aufgabe zugrunde, ein verbessertes Verfahren zur Herstellung von Chemiewerkstoffen, die thermoplastische Polyurethane enthalten, zur Verfügung zu stellen. Insbesondere lag der Erfindung die Aufgabe zugrunde, die Compoundierung bzw. das Refinern zu verbessern.

Gegenstand der Erfindung ist ein Verfahren zur Herstellung von Chemiewerkstoffen die thermoplastische Polyurethane (TPU) und gegebenenfalls mit TPU verträgliche Thermoplaste sowie gegebenenfalls Verstärkungsstoffe als weitere Komponenten enthal-ten, wobei das TPU in einem Zweiwellenschneckenkneter aufgeschmolzen und homogenisiert wird, dadurch gekennzeichnet, daß das in den Zweiwellenschneckenkneter gegebene thermoplastische Polyurethan eine Kennzahl kleiner als 1 aufweist und daß der im Zweiwellenschneckenkneter befindlichen Masse ein Isocyanat zugesetzt wird, so daß durch die Isocyanatzugabe in den Zweiwellenschneckenkneter die Kennzahl des thermoplastischen Polyurethans auf 1,00 bis 1,05 angehoben wird.

In einer bevorzugten Ausführungsform weist das TPU in dem Zustand, in dem es in den Zweiwellenschneckenkneter gegeben wird, eine Kennzahl von 0,9 bis 0,95, auf. Unter der Kennzahl wird das Verhältnis von NCO-Gruppen zu NCO-reaktiven Gruppen bei der Bildung des entsprechenden TPU verstanden.

Im Zweiwellenschneckenkneter wird soviel Isocyanat zugegeben, daß die Kennzahl auf einen Wert von 1,0 bis 1,05 angehoben wird.

Die thermoplastischen Polyurethane sind an sich bekannt und werden nach Verfahren des Standes der Technik hergestellt. Sie sind im allgemeinen aus langkettigen Polyolen vom Molekulargewicht 400 bis 10.000, Diisocyanaten und Kettenverlängerungsmitteln (vorzugsweise kurzkettigen Polyolen) vom Molekulargewicht bis zu 400 aufgebaut, wobei das NCO/OH-Verhältnis in der Regel bei 0,95 bis 1,10 liegt.

Als im wesentlichen lineare Polyole mit Molekulargewichten zwischen 400 und 10.000, bevorzugt zwischen 800 und 6.000, kommen erfindungsgemäß praktisch alle an sich bekannten, vorzugsweise 2, gegebenenfalls - in untergeordneten Mengen - auch 3, zerewitinoffaktive Gruppen (im wesentlichen Hydroxylgruppen) enthaltenden Polyester, Polylactone, Polyäther, Polythioäther, Polyesteramide, Polycarbonate, Polyacetale, Vinylpolymere wie z.B. Polybutadiendiole, bereits Urethan- oder Harnstoffgruppen enthaltende Polyhydroxylverbindungen, gegebenenfalls modifizierte natürliche Polyole sowie auch andere zerewitinoffaktive Gruppen wie Amino-, Carboxyl- oder Thiolgruppen enthaltende Verbindungen in Betracht. Diese Verbindungen entsprechen dem Stand der Technik und werden z.B. in den DE-Offenlegungsschriften 23 02 564, 24 23 764 und 25 49 372 (US-Patent 3 963 579) und 24 02 840 (US-Patent 3 984 607) sowie der DE-AS 24 57 387 (US-Patent 4 035 213) eingehend beschrieben. Erfindungsgemäß bevorzugt sind hyxdroxylgruppenhaltige Polyester aus Glykolen bzw. Adipinsäure, Phthal-und/oder Terephthalsäure sowie deren Hydrierungsprodukten, Hydroxylpolycarbonate, Polycaprolactame, Polyethylnoxid, Polypropylenoxid, Polytetrahydrofuran und Mischpolyäther aus Äthylenoxid und Propylenoxid.

Erfindungsgemäß zu verwendende Diisocyanate sind die an sich bekannten aliphatischen, cycloaliphatischen, aromatischen, araliphatischen und heterocyclischen Diisocyanate des Standes der Technik, wie sie z.B. in den bereits genannten DE-Offenlegungsschriften 23 02 564, 24 23 764, 25 49 372, 24 02 840 und 24 57 387 beschrieben sind. Erfindungsgemäß bevorzugte Diisocyanate sind gegebenenfalls durch Methylgruppen substituiertes Hexamethylendiisocyanat, Isophorondiisocyanat und 4,4′-Diisocyanatodiphenylmethan.

Die genannten Diisocyanate können gegebenenfalls zusammen mit bis zu ca. 15 Mol.-% (bezogen auf Diisocyanat) eines höherfunktionellen Polyisocyanats eingesetzt werden; die Menge des höherfunktionellen Polyisocyanats muß jedoch so begrenzt werden, daß ein noch schmelzbares bzw. thermoplastisches Produkt erhalten wird.

Eine größere Menge an höherfunktionellen Isocyanaten muß im allgemeinen durch die Mitverwendung von im Durchschnitt weniger als difunktionellen Hydroxyl- bzw. Aminoverbindungen (bzw. auch von Monoisocyanaten) ausgeglichen werden, so daß eine zu weit gehende chemische Vernetzung des Produktes vermieden wird. Es ist aber selbstverständlich auch möglich, die Reaktion so zu führen, daß eine nachträgliche chemische Vernetzung des Elastomeren während der Lagerung eintritt (z.B. durch Verwendung eines Überschusses an NCO-Gruppen enthaltenden Verbindungen). Beispiele für höherfunkktionelle Isocyanate und monofunktionelle Verbindungen sind ebenfalls dem oben zitierten Stand der Technik zu entnehmen. Beispielsweise seien Monoamine wie Butyl- und Dibutylamin, Octylamin, Stearylamin, N-Methylstearylamin, Pyrrolidin, Piperidin und Cyclohexalamin sowie Monoalkohole wie Butanol, 1-Äthylhexanol, Octanol, Dodecanol, Amylalkohole, Cyclohexanol und Äthylenglykolmonoäthyläther erwähnt.

Auch die erfindungsgemäß einzusetzenden Kettenverlängerungsmittel sind an sich bekannt und z.B. in den DE-Offenlegungsschriften 23 02 564, 23 23 764, 25 49 372, 24 02 799, 24 02 840 und 24 57 387 beschrieben. Es sind dies niedermolekulare Polyalkohole (vorzugsweise Glykole), Polyamine, Hydrazine und Hydrazide. Auch Aminoalkohole wie Äthanolamin, Diäthanolamin, N-Methyldiäthanolamin, Triäthanolamin und 3-Aminopropanol kommen erfindungsgemäß in Frage. Bevorzugte Kettenverlängerungsmittel sind Äthylenglykol, Di- und Triäthylenglykol, 1,2-Propandiol, 1,3- und 1,4-Butandiol, 1,6-Hexandiol, 2-Äthylhexandiol-(1,3), 2,2-Dimethylpropandiol, 1,4-Bis-hydroxy-methylcyclohexan und Hydrochinondihydroxyäthyläther. Besonders bevorzugt sind Hydrochinondi-β-hydroxyäthyläther, 1,4-Butandiol und 1,6-Hexandiol.

In einer besonders bevorzugten Ausführungsform wird das thermoplastische Polyurethan in einem Zweiwellenschneckenkneter mit Verstärkungsstoffen, insbesondere faserartigen Verstärkern, geblendet.

Als faserartige Verstärker sind anorganische Fasern den organischen Fasern vorzuziehen, weil der Verstärkungseffekt größer ist Außerdem ist die Wärmestandfestigkeit der anorganischen Fasern günstiger. Bevorzugte anorganische Fasern für die vorliegende Erfindung sind insbesondere beschlichtete Glasfasern mit einer Stärke von 8 bis 30 µm, insbesondere 10 bis 18 µm, sowie mit einer Länge von 0,3 mm bis etwa 100 mm, insbesondere von 1 bis 10 mm, die nach dem Stand der Technik hergestellt werden.

Die Glasfaserschlichten bestehen im wesentlichen aus zwei Komponenten: einer filmbildenden Komponente (im allgemeinen Polyvinylacetat, Polyester, Polyurethane oder Epoxidharze) und als Haftvermittler im allgemeinen einer siliziumorganischen Verbindung. Im Falle der erfindungsgemäß bevorzugten Schlichtemittel auf Polyurethanbasis sollte mindestens ein Aminogruppen enthaltender Haftvermittler anwesend sein. Daneben können die Glasfaserschlichten gegebenenfalls auch an sich bekannte Antistatika und Gleitmittel enthalten.

In einer weiteren bevorzugten Ausführungsform können zusätzlich oder anstelle der Verstärkungsstoffe an sich bekannte Polymere unter Bildung eines Blends in den Extruder gegeben werden. Besonders bevorzugte derartige Polymere sind Polycarbonate und Acrylnitrilbutadienstyrolterpolymere, insbesondere ABS. Besonders bevorzugte derartige Polymere sind ABS und Polycarbonat.

Geeignete Extruder sind an sich bekannt und werden z.B in den DE-Patentschriften 813 154, 862 668 und 940 109, in US-PS 3 233 025, US-PS 3 642 694, DE-OS 24 47 368, DE-OS 26 10 980 sowie insbesondere DE-AS 2 302 564 und DE-OS 25 49 372 (U-PS 3 963 679) beschrieben.

Die Verweilzeiten der Schmelze in der Schneckenmaschine betragen in der Regel 0,3 bis 30 Minuten, bevorzugt 0,5 bis 4 Minuten. Die Temperatur des Schneckengehäuses liegt zwischen etwa 60 und 300°C (ca. 80 bis 280°C in der Eingangszone; ca. 100 bis 300°C in der Mitte des Extruders und ca. 60 bis 250°C in der Austragszone). Die aus dem Extruder austretende Schmelze wird nach an sich bekannten Verfahren abgeschreckt und zerkleinert. Die Verfahrensprodukte können auf die übliche Weise thermoplastisch verarbeitet werden.

Wenn nicht anders vermerkt, sind in den Beispielen Mengenangaben als Gewichtsteile bzw. Gewichtsprozente zu verstehen. In Beispiel 1 wird eine Zweiwellenschneckenknetpresse des Typs ZSK 53 V der Firma Werner & Pfleiderer, Stuttgart, mit selbstreinigendem Wellenbesatz verwendet.

Die Länge des Verfahrensanteils entspricht etwa dem 42-fachen Wellendurchmesser. Für alle Beispiele wird der gleiche Wellenbsatz mit einem Knetelementanteil von ca. 20 % verwendet. Der Verfahrensanteil besteht aus 12 Gehäusen, wobei das erste mit einem Einspeisetrichter für den Kautschuk und die Faser versehen ist. Funktion und Wirkungsweise der Schneckenmaschine, von Knet- und Förderelementen des Wellenbesatzes usw. sind in den Firmenschriften von Werner & Pfleiderer bzw. in der DE-OS 2 302 564 (US-PS 3 963 679) ausführlich beschrieben.

Die in den Beispielen verwendete Faser ist eine handelsübliche Glasfaser mit einem Durchmesser von 12 µm und 6 mm Länge, die gemäß Beispiel 1 von DE-AS 24 26 657 beschlichtet ist.

Die erfindungsgemäß erhaltenen Werkstoffe sind besonders geeignet für Karosserieaußenteile.

### Beispiele

In den folgenden Beispielen wurden folgende Substanzen verwendet:
- PU 1 =: Polyesterurethanelastomer auf Basis
Polybutandioladipat
Hexandiol
Butandiol
Diphenylmethandiisocyanat
- PC 1 =: Makrolon CD 2000
Acrylglas Typ V 920 Röhm & Haas
- Isocyanat =: Diphenylmethandiisocyanat
- PU 2 =: Polyesterurethanelastomer auf Basis
Polybutandiol-diäthylenglycol-adipat
Butandiol
Biphenylmethandiisocyanat
- PU 3 =: Polyurethan auf Basis
Polyäthercarbonat
Butandiol
Diphenylmethandiisocyanat
- PU 4 =: Polyesterurethanelastomer auf Basis
Polybutandioladipat
Hexandiol
Butandiol
Diphenylmethandiisocyanat
- Glasfaser: φ 11 µ
Länge 4,5 mm
PU geschlichtet
- Additive: Antioxidantien
Hydrolyseschutz

### Beispiel 1

Das Polyurethan PU-1 und das Polycarbonat PC-1 wurden in der aus Tabelle 1 ersichtlichen Menge mit der Angabe der dort angegebenen Zusatzstoffe unter folgenden Bedingungen gemischt.

### Verfahrensbeschreibung zu Tabelle I

In einem Trommelmischer werden die drei Polymerkomponenten PU 1, PC 1 und Acrylglas im angegebenen Verhältnis gemischt. Mit dieser Mischung wird eine dem Zweiwellenextruder über Gehäuse 1 vorgeschaltete Dosierbandwaage beschickt.

Über zwei weitere Differenzialdosierwaagen werden das Isocyanat und das Oxidationsschutzmittel dem Extruder in Gehäuse 4 zugeführt.

Die offenen Gehäuse sind mit N₂ überlagert.

Die einzelnen Komponenten werden im Extruder homogenisiert bei 220-250°C und voller Maschinendrehzahl, bei einem Gesamtdurchsatz von 100 -150 kg/h.

Die abgezogenen Stränge werden mittels Kühlwasser auf ca. 60°C abgekühlt und granuliert.

Vor der Verarbeitung des fertigen Compounds muß dieser 1 Stunde bei 110°C getrocknet werden.

Aus Tabelle 1 folgt, daß durch den Zusatz eines Isocyanates eine deutliche Verbesserung der Schlagzähigkeit zu erreichen ist.

**Tabelle 1**

| TPU-PC-Compound | | | | | | | | |
|---|---|---|---|---|---|---|---|---|
| PU-1 | PC-1 | Anti-Oxidat Irg. 1010 | Acrylglas-V 920 | Isocyanat | Zugfestigkeit | E-Modul | MVI 220°C | Schlagzähigkeit - 25°C |
| Tl. | Tl. | Tl. | Tl. | Tl. | MPa | MPa | g / 10 m | kj/m² |
| 50:11 | 61 | 0,1 | 1,5 | - | 43,8 | 1340 | 77,8 | 12,6 |
| 50:11 | 61 | 0,1 | 1,5 | 0,5 | 51,1 | 1385 | 73,3 | 21,8 |
| 50:11 | 61 | 0,1 | 1,5 | 1 | 51,8 | 1378 | 51,9 | 39 |
| 50:11 | 61 | 0,1 | 1,5 | 1,5 | 53,4 | 1427 | 42,8 | 52,9 |
| 50:11 | 61 | 0,1 | 1,5 | 2 | 58,6 | 1439 | 41,6 | ohne Bruch |

### Beispiel 2

Die thermoplastischen Polyurethane PU-2 und PU-3 wurden granuliert mit bzw. ohne Zusatz eines Isocyanates. Aus Tabelle 2 erfolgt die entsprechende Änderung der Lösungsviskosität.

**Tabelle 2**

| Refinern TPU auf ZSK 120 kurz | | |
|---|---|---|
| | Lösungsviskosität 20 % Dimethylformamit bei 25°C (mPas) | |
| | N | T |
| PU-2 + 1 % Diphenylmethandiisocyanat = MDI | 900 | 7200 |
| PU-2 ohne MDI | 700 | 1500 |
| Ausgangsware | 2500 | 8800 |
| PU-3 + 1,5 % MDI | 1500 | 18000 |
| PU-3 ohne MDI | 1100 | 1250 |
| N = Granulat ungetempert T = Granulat 5 Stunden bei 120°C getempert | | |

### Beispiel 3

In der aus Tabelle 3 ersichtlichen Menge wurde das thermoplastische Polyurethan PU-4 mit Additiven und Glasfasern versetzt und im Extruder unter Verwendung von MDI bzw. ohne Verwendung von MDI aufgeschmolzen. Aus Tabelle 3 erfolgt die Verbesserung der Schlagzähigkeit bei Verwendung von MDI.

**Tabelle 3**

| RTPU mit 20 % Glasgehalt | | | | | | | |
|---|---|---|---|---|---|---|---|
| PU-4 | Additiv | Glasfaser | MDI | Zugfestigkeit MPa | Grenzbiegespannung MPa | E-Modul MPa | Schlagzähigkeit - 25°C kj/m² |
| 80 | 2,2 | 21 | 1,8 | 70-80 | 70-80 | 2200 | 50-60 |
| 80 | 2,2 | 21 | ohne | 50-60 | 65-75 | 2000 | 17-23 |

## Patentansprüche

1. Verfahren zur Herstellung von Chemiewerkstoffen, die thermoplastische Polyurethane (TPU) und gegebenenfalls mit TPU verträgliche Thermoplaste sowie gegebenenfalls Verstärkungsstoffe als weitere Komponenten enthalten, wobei das TPU in einem Zweiwellenschneckenkneter aufgeschmolzen und homogenisiert wird, dadurch gekennzeichnet, daß das in den Zweiwellenschneckenkneter gegebene thermoplastische Polyurethan eine Kennzahl kleiner als 1 aufweist und daß der im Zweiwellenschneckenkneter befindlichen Masse ein Isocyanat zugesetzt wird, so daß durch die Isocyanatzugabe in den Zweiwellenschneckenkneter die Kennzahl des thermoplastischen Polyurethans auf 1,00 bis 1,05 angehoben wird.

2. Verfahren nach Anspruch 1, dadurch gekennzeichnet, daß das zugegebene Isocyanat Hexamethylendiisocyanat und/oder 4,4'-Diisocyanatdiphenylmethan ist.

3. Verfahren nach Anspruch 1, dadurch gekennzeichnet, daß in den Zweiwellenschneckenkneter als weitere Komponente ein mit dem Polyurethan verträglicher Thermoplast zugegeben wird.

4. Verfahren nach Anspruch 3, dadurch gekennzeichnet, daß als Thermoplast Polycarbonat, ABS oder Polyamid eingesetzt wird.

5. Verfahren nach Anspruch 1, dadurch gekennzeichnet, daß zu dem thermoplastischen Polyurethan in den Zweiwellenschneckenkneter ein Verstärkungsstoff gegeben wird.

6. Verfahren nach Anspruch 5, dadurch gekennzeichnet, daß als Verstärkungsstoff eine anorganische Faser eingesetzt wird.

7. Verwendung der nach wenigstens einem der vorhergehenden Ansprüche erhaltenen Chemiewerkstoffe für Karosserieaußenteile.

## Claims

1. A process for the production of plastics containing thermoplastic polyurethanes (TPU) and optionally other components compatible with TPU and optionally reinforcing materials as further components, the TPU being melted and homogenized in a twin-screw extruder, characterized in that the thermoplastic polyurethane introduced into the twin-screw extruder has an index below 1 and in that an isocyanate is added to the melt in the twin screw extruder so that the index of the thermoplastic polyurethane is increased to 1.00 to 1.05 by introduction of the isocyanate into the twin-screw extruder.

2. A process as claimed in claim 1, characterized in that the isocyanate added is hexamethylene diisocyanate and/or 4,4'-diisocyanatodiphenyl methane.

3. A process as claimed in claim 1, characterized in that a thermoplastic compatible with the polyurethane is introduced into the extruder as a further component.

4. A process as claimed in claim 3, characterized in that a polycarbonate, ABS or polyamide is used as the thermoplastic.

5. A process as claimed in claim 1, characterized in that a reinforcing material is added to the thermoplastic polyurethane in the extruder.

6. A process as claimed in claim 5, characterized in that an inorganic fibre is used as the reinforcing material.

7. The use of the plastics obtained by the process claimed in at least one of the preceding claims for exterior bodywork parts.

## Revendications

1. Procédé de préparation de matériaux chimiques contenant des polyuréthannes thermoplastiques (PUT) et le cas échéant des matières thermoplastiques compatibles avec le PUT et le cas échéant des matières renforçantes en tant qu'autres composants, dans lequel on fond et on homogénéise le PUT dans un malaxeur à deux vis, caractérisé en ce que le polyuréthanne thermoplastique introduit dans le malaxeur à deux vis présente un indice inférieur à 1 et en ce que l'on ajoute, à la masse qui se trouve dans le malaxeur à deux vis, un isocyanate dont l'addition porte l'indice du polyuréthanne thermoplastique à un niveau de 1,00 à 1,05.

2. Procédé selon la revendication 1, caractérisé en ce que l'isocyanate ajouté est l'hexaméthylènediisocyanate et/ou le 4,4'-diisocyanatodiphénylméthane.

3. Procédé selon la revendication 1, caractérisé en ce que l'on introduit avec le polyuréthanne dans le malaxeur à deux vis, en tant qu'autre composant, une matière thermoplastique compatible avec le polyuréthanne.

4. Procédé selon la revendication 3, caractérisé en ce que la matière thermoplastique utilisée consiste en polycarbonate, ABS ou polyamide.

5. Procédé selon la revendication 1, caractérisé en ce que l'on ajoute une matière renforçante au polyuréthanne thermoplastique dans le malaxeur à deux vis.

6. Procédé selon la revendication 5, caractérisé en ce que la matière renforçante consiste en fibres minérales.

7. Utilisation des matériaux chimiques obtenus selon au moins une des revendications qui précèdent pour la fabrication de pièces extérieures de carrosseries.
